(19) Europäisches Patentamt
European Patent Office
Office européen des brevets

(11) **EP 4 617 550 A1**

(12) **EUROPÄISCHE PATENTANMELDUNG**

(43) Veröffentlichungstag:
**17.09.2025 Patentblatt 2025/38**

(21) Anmeldenummer: **24162694.4**

(22) Anmeldetag: **11.03.2024**

(51) Internationale Patentklassifikation (IPC):
**F16L 59/065** (2006.01)   **F16L 59/02** (2006.01)
**F16L 59/08** (2006.01)

(52) Gemeinsame Patentklassifikation (CPC):
**F16L 59/065; F16L 59/026; F16L 59/029;
F16L 59/08**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **V21 GmbH**
**22765 Hamburg (DE)**

(72) Erfinder:
• **Wiedenroth, Roland**
**22765 Hamburg (DE)**
• **Lang, Malte**
**53949 Dahlem (DE)**

(74) Vertreter: **Samson & Partner Patentanwälte mbB**
**Widenmayerstraße 6**
**80538 München (DE)**

(54) **THERMISCHES VAKUUMDÄMMELEMENT**

(57) Bereitstellung eines thermischen Vakuumdämmelementes zur Verringerung des Verlustes von Wärme oder Kälte über Wärmeströmung, Wärmestrahlung und Wärmeleitung. Das thermisches Vakuumdämmelement umfasst ein erstes flächiges Begrenzungsteil, und ein zweites flächiges Begrenzungsteil; die voneinander beabstandet sind und zwischen sich einen vakuumierten Raum definieren. Das Vakuumdämmelement umfasst erste und zweite Stützelemente, die sich in den vakuumierten Raum erstrecken. Mindestens eines der ersten Stützelemente liegt an dem ersten flächigen Begrenzungsteil, und eines der zweiten Stützelemente ist an dem zweiten flächigen Begrenzungsteil an. Das Vakuumdämmelement umfasst erste und zweite Fasergebilde, die die ersten und zweiten Stützelemente miteinander verbinden. Die Fasergebilde weisen eine geringe Wärmeleitfähigkeit auf und fangen zumindest den durch das Vakuum auf die Begrenzungsteile erzeugten Druck auf. Ein flächig ausgestaltetes und wärmestrahlungsreflektierendes Element, mit dem mindestens eines der ersten und zweiten Fasergebilde befestigt sind, erstreckt sich im vakuumierten Raum und ist ausgebildet, thermische Strahlung, die von den Begrenzungsteilen und den Stützelementen ausgeht, zu isolieren.

FIG. 1

EP 4 617 550 A1

**Beschreibung**

Die vorliegende Erfindung betrifft ein thermisches Vakuumdämmelement.

Der Transport und damit der Verlust von Wärme oder Kälte kann über drei Arten erfolgen: Wärmeströmung, Wärmestrahlung und Wärmeleitung.

Wärmeströmung oder Konvektion in Dämmelementen erfolgt in der Regel über die Moleküle der Luft. Dieser Effekt wird durch Vakuumieren begrenzt. Die thermische Isolationswirkung liegt dann in der fehlenden Wärmeleitfähigkeit des Vakuums begründet. Ohne Teilchen, wie beispielsweise Luftmoleküle (oder Moleküle anderer Gase) kann nahezu kein Wärmetransport auf der Grundlage von Wärmeströmung stattfinden.

Nichtsdestotrotz findet Wärmetransport in vakuumierten Dämmelementen immer noch aufgrund von Wärmestrahlung statt. Im Vakuum selbst ist dies der einzig mögliche Transport von Wärmeenergie. Wärme wird hierbei durch Strahlung wie z.B. Infrarotstrahlung übertragen. Dies ist auch über große Entfernungen und durch ein Vakuum möglich.

Der von einem Körper abgestrahlte Wärmestrom P, auch Strahlungsleistung genannt, kann nach dem Stefan-Boltzmann-Gesetz berechnet werden, welches folgendermaßen lautet:

$$P = \sigma \, \varepsilon \, A \, T^4$$

wobei $\varepsilon$ den Emissionsgrad des Körpers beschreibt, der zwischen den Werten 0 für einen perfekten Spiegel und 1 für einen schwarzen Körper liegt, und $\sigma = 5{,}67 \cdot 10^{-8} \frac{W}{m^2 \, K^4}$ die Stefan-Boltzmann-Konstante beschreibt.

A ist die Fläche und T die Temperatur des abstrahlenden Körpers.

Zudem erfolgt in Vakuumdämmelementes der Wärmetransport über Wärmeleitung. Dies geschieht zumeist über den Stützkern des Vakuumdämmelementes, der das Element mechanisch stabilisiert sowie über die Ränder des Vakuumdämmelements, die den vakuumierten Raum seitlich begrenzen.

Herkömmlicherweise bestehen Vakuumdämmelemente aus einem offenporigen Stützkern, der von mehreren Lagen metallisierter Kunststofffolie umhüllt ist. Das Material des Stützkerns sollte selbst eine geringe Wärmeleitfähigkeit aufweisen. Bekannte Stützkerne sind häufig aus einem pulverförmigen Dämmstoff wie z. B. pyrogener Kieselsäure gefertigt. Als weiteres Kernmaterial sind Glasfaservliese bekannt.

Anwendungen von Vakuumdämmplatten liegen beispielsweise im Bereich von Kühl- und Gefrierschränken sowie im Bereich von Warmwasserspeichern. Weitere bekannte Anwendungen liegen im Bereich der Gebäudedämmung. Generell können thermische Wärmedämmelemente überall dort eingesetzt werden, wo eine hohe thermische Isolation bei geringer Schichtdicke der Isolationsschicht gefragt ist.

In dem europäischen Patent EP 3 936 324 B1 wird ein thermisches Vakuumdämmelement zur Begrenzung der Wärmeströmung und der Wärmeleitung beschrieben.

Nachteilig bei den bisher bekannten Vakuumdämmplatten ist der vorhandene Wärmetransport über Wärmestrahlung.

Aus diesen und anderen Gründen besteht ein Bedarf an der vorliegenden Erfindung. Es kann eine Aufgabe der Erfindung sein, einen unerwünschten Wärmetransport aufgrund von Wärmestrahlung, Wärmeströmung und/oder Wärmeleitung zu verringern.

Die Ziele und Merkmale der vorliegenden Erfindung werden deutlich in der folgenden Beschreibung von Ausführungsbeispielen, die mit Bezug auf die beigefügten Figuren erfolgt, in denen:

Fig. 1 schematisch eine Seitenansicht eines erfindungsgemäßen thermischen Vakuumdämmelements zeigt;

Fig. 2 schematisch eine Seitenansicht eines weiteren erfindungsgemäßen thermischen Vakuumdämmelements zeigt;

Fig. 3 schematisch eine Seitenansicht eines dritten erfindungsgemäßen thermischen Vakuumdämmelements zeigt;

Fig. 4 schematisch eine Seitenansicht eines vierten erfindungsgemäßen thermischen Vakuumdämmelements zeigt;

Fig. 5 schematisch eine Kraftübertragung in dem erfindungsgemäßen thermischen Vakuumdämmelement der Fig. 4 zeigt;

Fig. 6 schematisch eine Seitenansicht durch ein erfindungsgemäßes Vakuumdämmelement zeigt, dass eine Kante ausbildet.

Fig. 7 schematisch eine Draufsicht auf ein erfindungsgemäßes Begrenzungsteil mit Stützelementen zeigt; und

Fig. 8 schematisch einen Schnitt entlang der Linie A-A' in Fig.4 zeigt;

Im Folgenden sind unter Bezugnahme auf die Zeichnungen Gesichtspunkte und Ausführungsformen beschrieben, worin gleiche oder ähnliche Bezugszeichen im Allgemeinen benutzt werden, um auf gleiche oder ähnliche Elemente zu verweisen. In der folgenden Beschreibung sind zahlreiche bestimmte Einzelheiten dargelegt, um ein gründliches Verständnis eines oder mehrerer Gesichtspunkte der Ausführungsformen zu bieten. Einem Fachmann kann jedoch offensichtlich sein, dass ein oder mehrere Gesichtspunkte der Ausführungsformen mit einem geringeren Maß der bestimmten Einzelheiten ausgeführt werden kann. In weiteren Fällen sind Elemente in schematischer Form gezeigt, um das Beschreiben eines oder mehrerer Gesichtspunkte der Ausführungsformen zu erleichtern. Die folgende Beschreibung soll daher nicht als beschränkend aufgefasst werden. Es wird bemerkt, dass die Darstellung der verschiedenen Elemente in den Figuren nicht notwendigerweise maßstabsgetreu ist.

In der Beschreibung mit Bezug auf die Zeichnungen verwendete Richtungsterminologie, wie etwa zum Beispiel "oben", "unten", "Oberseite", "Unterseite", "links", "rechts", "Vorderseite", "Rückseite", "senkrecht", "waagerecht" usw. ist nicht beschränkend zu verstehen. Bestandteile von Ausführungsformen können in einer Anzahl unterschiedlicher Ausrichtungen positioniert werden, die Richtungsterminologie wird lediglich zur Erläuterung verwendet. Es versteht sich, dass weitere Ausführungsformen verwendet werden können und bauliche oder logische Veränderungen vorgenommen werden können, ohne von dem Konzept der vorliegenden Erfindung abzuweichen.

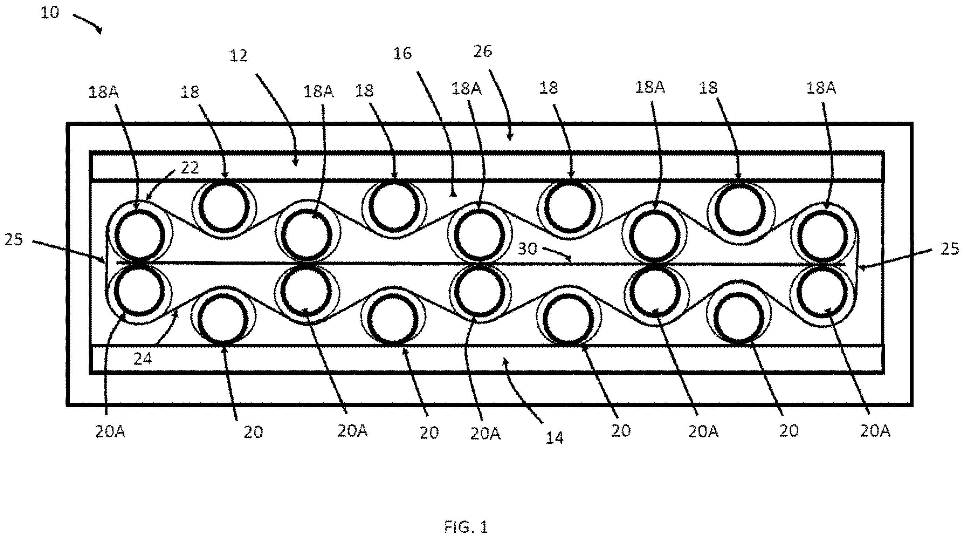

FIG. 1 zeigt stark schematisiert eine Seitenansicht eines erfindungsgemäßen thermischen Vakuumdämmelements 10. Das Vakuumdämmelement 10 umfasst ein erstes Begrenzungsteil 12 und ein zweites Begrenzungsteil 14. Das Begrenzungsteil 12 und das Begrenzungsteil 14 sind beabstandet zueinander und definieren zwischen sich einen vakuumierten Raum 16. Von dem ersten Begrenzungsteil 12 zu dem zweiten Begrenzungsteil 14 soll ein Wärmetransport, wie etwa über Wärmestrahlung, Wärmeströmung und/oder Wärmeleitung minimiert werden.

In den vakuumierten Raum 16 erstecken sich erste Stützelemente 18, 18A und zweite Stützelemente 20, 20A. Mindestens eines der ersten Stützelemente 18 liegt an dem ersten Begrenzungsteil 12, und mindestens eines der zweiten Stützelemente 20 liegt an dem zweiten Begrenzungsteil 14 an. Die ersten Stützelemente 18 sind von dem zweiten Begrenzungsteil 14 und die zweiten Stützelemente 20 von dem ersten Begrenzungsteil 12 beabstandet. Die ersten Stützelemente 18, 18A und die zweiten Stützelementen 20, 20A sind voneinander beabstandet. Ein erstes Fasergebilde 22 verbindet die ersten Stützelemente 18, 18A miteinander und ein zweites Fasergebilde 24 verbindet die zweiten Stützelemente 20, 20A miteinander.

Die mechanische Stabilität der Konstruktion des thermischen Vakuumdämmelementes 10 ist hierdurch verbessert. Aus diesem Grund kann die Stärke der Außenhaut, wie beispielsweise der ersten und zweiten Begrenzungsteile 12, 14 reduziert werden und gleichzeitig die Isolationsleistung weiter verbessert werden.

Das erste und das zweite Fasergebilde 22, 24 weisen eine geringe Wärmeleitfähigkeit auf und sind derart ausgestaltet, zumindest den durch das Vakuum auf das erste und das zweite Begrenzungsteil 12, 14 erzeugten Druck aufzufangen.

Ein wärmestrahlungsreflektierendes Element 30 erstreckt sich im vakuumierten Raum 16 zwischen den ersten und den zweiten Stützelementen 18, 20. Das wärmestrahlungsreflektierende Element 30 ist lose zwischen den ersten und zweiten Stützelementen 18, 20 einlegbar. Mindestens eines der ersten Stützelemente 18A und der zweiten Stützelemente 20A ist an dem wärmestrahlungsreflektierendem Element 30 befestigt.

Das wärmestrahlungsreflektierende Element 30 hat hierbei keinen direkten Kontakt zu den beiden Begrenzungsteilen 12, 14 und ist somit zu diesen thermisch isoliert.

Das wärmestrahlungsreflektierende Element 30 verringert in dem thermischen Vakuumdämmelement 10 den Wärmetransport aufgrund von Wärmestrahlung oder Temperaturstrahlung. Das Vakuum im vakuumierten Raum 16 verringert den Wärmetransport durch Wärmeströmung oder Konvektion. Der Effekt der Wärmeleitung in dem Dämmelement 10 wird u. a. durch die Fasergebilde 22, 24 verringert, welche eine geringe Wärmeleitfähigkeit aufweisen.

Das erfindungsgemäße thermische Vakuumdämmelement 10 verringert somit gleichzeitig die drei Formen Wärmestrahlung, Wärmeströmung und Wärmeleitung eines unerwünschten Wärmetransportes und stellt damit eine optimale Dämmwirkung bei gleichzeitiger hoher mechanischer Stabilität bereit.

Das wärmestrahlungsreflektierende Element 30 stellt ebenfalls eine Barriere bezüglich der Restgaswärmeleitung dar. Hierdurch wird bei gleichem Restdruck die Restgaswärmeleitung nahezu halbiert, bzw. wird dieselbe Wärmeübertragung bereits bei höherem Restdruck erreicht. Dies mildert die Anforderungen an die Vakuumqualität etwas ab. Die Stützelemente 18, 20 können über das wärmestrahlungsreflektierende Element 30 befestigt sein und müssen nicht länger mit der Außenhaut des thermischen Vakuumdämmelementes 10 beispielsweise verschweißt werden. Sie könnten daher aus einem anderen Material als die Außenhaut (z.B. Aluminium) gefertigt werden.

Eine Wärmeleitung von dem ersten Begrenzungsteil 12 zu dem zweiten Begrenzungsteil 14 über die Fasergebilde 22, 24, kann nur über das wärmestrahlungsreflektierende Element 30 und über die Stützelemente 18, 18A, 20, 20A erfolgen. Die Wärmeleitung durch die Fasergebilde 22, 24 wird infolgedessen aufgrund des längeren Kontaktweges über die Stützelemente 18, 18A, 20, 20A gesenkt. Dies ist hilfreich, wenn der Faserwerkstoff selbst einen höhere Wärmeleitgeschwindigkeit aufweist (z.B. bei Glasfaser).

Eine Wärmeströmung kann nur über den vakuumierten Raum 16, erfolgen. d.h. über die im nicht perfekten Vakuum verbleibende Gasatome und Gasmoleküle. Die Erfinder konnten hiermit eine Wärmeübertragung in einem Bereich von nur $10^{-5}$ W/mK nachweisen.

Das erste Begrenzungsteil 12 und das zweite Begrenzungsteil 14 können im Wesentlichen zueinander parallel angeordnet sein. Dies ermöglicht eine kompakte und flexibel einsetzbare Bauweise des thermischen Vakuumdämmelementes 10.

Die Begrenzungsteile 12, 14 können eine obere und eine untere Oberfläche des Vakuumdämmelements 10 definieren. Die Begrenzungsteile 12, 14 können aus hochvakuumtauglichem Material gefertigt sein. Die Wärmeleitfähigkeit der Begrenzungsteile 12, 14 ist für die Wärmeleitfähigkeit des thermischen Vakuumdämmelements 10 nicht von Bedeutung, da sie einander nicht berühren.

Die Begrenzungsteile 12, 14 können flach sein und jeweils vollständig in einer Ebene liegen. So lassen sich Platten ausbilden. Die Platten können beispielsweise zur Gebäudeisolierung oder zur Isolierung von Geräten wie beispielsweise Kühlschränken oder Öfen dienen. Die Platten können mehrlagig verlegt werden. Die einzelnen Platten der aufeinanderfolgenden Lagen können dabei gegeneinander versetzt angeordnet werden, so dass Stoßkanten verschiedener Lagen nicht übereinander zu liegen kommen. Die Platten können in anderen Worten ziegelsteinartig übereinander angeordnet werden.

Die Begrenzungsteile 12, 14 können in anderen Ausführungsformen eine beliebige Form annehmen. Die Begrenzungsteile 12, 14 können beispielsweise flächig und/oder gebogen sein. Das erste Begrenzungsteil 12 kann als ein wellenförmiges oder gewelltes Bauteil ausgeführt sein. Das zweite Begrenzungsteil 14 kann in einer Ausführungsform ebenfalls als ein wellenförmiges oder gewelltes Bauteil ausgeführt sein. Es kann eine Vielzahl von Wellen vorgesehen sein. Dies ermöglicht ebenfalls eine flexibel einsetzbare Bauweise des thermischen Vakuumdämmelementes 10.

Das erste und das zweite Fasergebilde 22, 24 können hierbei ringförmig um die Stützelemente 18,18A, 20, 20A angebracht sein, wie beispielsweise in FIG. 1 dargestellt. Die mechanische Stabilität der Konstruktion des thermischen Vakuumdämmelementes 10 ist hierdurch weiter verbessert.

Die Stützelement können mit jedem Wand- oder Stützelement des thermischen Vakuumdämmelementes 10 verbunden sein, beispielsweise mit einer oder mehreren Seitenwänden des Vakuumdämmelementes 10. Die Stützelemente 18, 18A, 20, 20A können eine kreis- oder ellipsenförmige, rechteckige oder andere Querschnittsform aufweisen. Dies erhöht ebenfalls die mechanische Festigkeit des thermischen Vakuumdämmelementes.

In einer Ausführungsform können die miteinander verbundenen ersten und zweiten Fasergebilde 22, 24 als ein einstückiges Fasergebilde ausgeführt sein. Dies erhöht weiterhin die mechanische Festigkeit des thermischen Vakuumdämmelements 10 und vermeidet Verbindungsstrukturen an den Rändern 25 der Fasergebilde 22, 24.

In einer bevorzugten Ausführungsform und in FIG. 1 gezeigt, können das erste Fasergebilde 22 und das zweite Fasergebilde 24 sind an ihren Rändern 25 derart miteinander verbunden sein, dass das wärmestrahlungsreflektierende Element 30 von dem miteinander verbundenen ersten und zweiten Fasergebilden 22, 24 umschlossen ist. Dadurch wird eine räumlich kompakte Ausführung des thermischen Vakuumdämmelementes bei gleichzeitiger verbesserter mechanischer Stabilität erreicht.

In einer Ausführungsform umfasst das wärmestrahlungsreflektierende Element 30 eine Folie und/oder eine flächig ausgestaltete Platte und/oder eine wellenförmige und/oder gewellte Platte und/oder ein flächig ausgestaltetes Blech und/oder ein wellenförmiges und/oder gewelltes Blech. Es kann eine Vielzahl von Wellen vorgesehen sein.

Das wärmestrahlungsreflektierende Element 30 kann einstückig mit den Stützelementen 18A und 20A ausgefertigt sein.

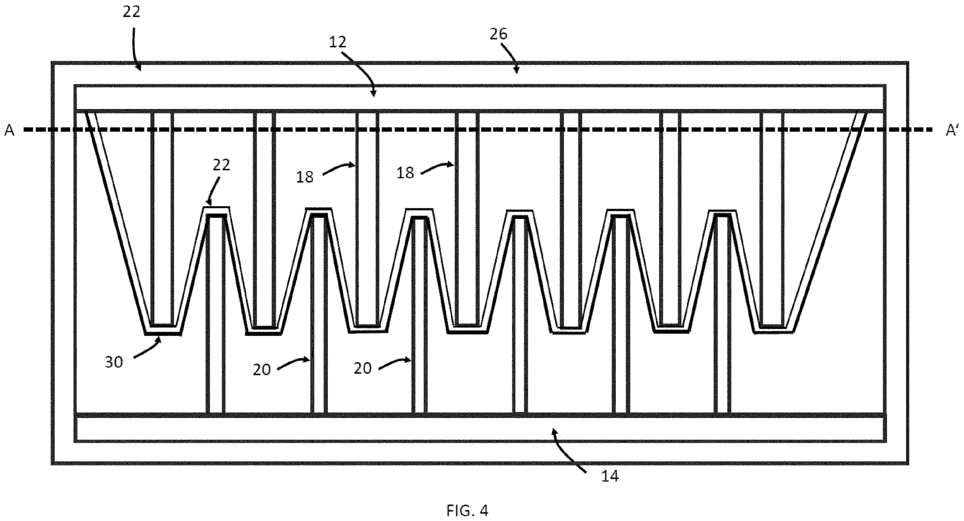

Die flexiblen Eigenschaften einer Folie erlauben ein erleichtertes Anpassen des die Wärmestrahlung verringernden Elements 30 an die geometrischen sowie baulichen Gegebenheiten und Randbedingungen des vakuumierte Raumes 16, wie beispielsweise in FIG. 4 dargestellt. Somit kann auch in Vakuumdämmelementen, bei denen der vakuumierte Raum 16 enge, verwinkelte oder andere ungünstige räumliche Geometrien aufweist, ein unerwünschter Wärmetransport durch Wärmestrahlung vermieden werden.

Die Folie kann als perfekter oder nahezu perfekter Spiegel ausgeführt sein, also demnach bei Wahl eines geeigneten Materials einen Emissionsgrad $\varepsilon$ von nahezu 0 besitzen, und somit die beispielsweise von dem ersten Begrenzungsteil 12 ausgehende Wärmestrahlung in den vakuumierten Raum zwischen dem Begrenzungsteil 12 und der Folie zurückreflektieren. Dies verhindert, dass die Wärmestrahlung beispielsweise auf das Begrenzungsteil 14 trifft. Die Folie kann als Metallfolie, beispielsweise als Kupfer-, Aluminium-, Gold- oder Silberfolie oder als Folie mit einer geeigneten Beschichtung oder als Kombination aus den vorgenannten Materialien ausgeführt sein. Eine geeignete Beschichtung kann beispielsweise Pigmente zur Reflexion von Infrarotstrahlen enthalten, wie etwa Pigmente, die Silikatmineral-Plättchen enthalten. Die Folie kann auch kunststoffhaltige Materialien umfassen.

In einer Ausführungsform kann die Folie mehrere übereinander angeordneten Folienschichten umfassen. Dadurch werden die Spiegeleigenschaft der Folie und die mechanische Stabilität der Folie verbessert.

Das wärmestrahlungsreflektierende Element 30 kann eine Platte umfassen. Damit kann das Element 30 neben seiner Funktion als Isolator vor der Wärmestrahlung auch mechanisch stabilisierende und unterstützende Funktionen innerhalb der mechanischen Struktur des thermischen Vakuumdämmelementes 10 bereitstellen. Somit wird die mechanische Stabilität des thermischen Vakuumdämmelementes 10 verbessert. Die Platte kann als Metallplatte, beispielsweise als Kupfer- oder Aluminiumplatte oder als Platte mit einer geeigneten Beschichtung oder als Kombination aus den vorgenannten Materialien ausgeführt sein. Eine geeignete Beschichtung kann beispielsweise Pigmente zur Reflexion von Infrarotstrahlen enthalten, wie etwa Pigmente, die Silikatmineral-Plättchen enthalten. Die Platte kann auch kunststoffhaltige Materialien umfassen.

In einer Ausführungsform ist das wärmestrahlungsreflektierende Element 30 ausgebildet, thermische Strahlung, die von dem ersten oder zweiten Begrenzungsteil 12, 14 und den ersten oder zweiten Stützelementen 18, 18A, 20, 20A ausgeht, von dem zweiten oder ersten Begrenzungsteil 14, 12 und den zweiten oder ersten Stützelementen 20, 20A, 18, 18A zu isolieren. Dies ermöglicht eine verbesserte Unterbrechung der Wärmestrahlung innerhalb des vakuumierten Raumes, insbesondere derjenigen Wärmestrahlung, welche von dem wärmeren der beiden Begrenzungsteile 12, 14 ausgeht und in Richtung des kälteren der beiden Begrenzungsteile 12, 14 strahlt.

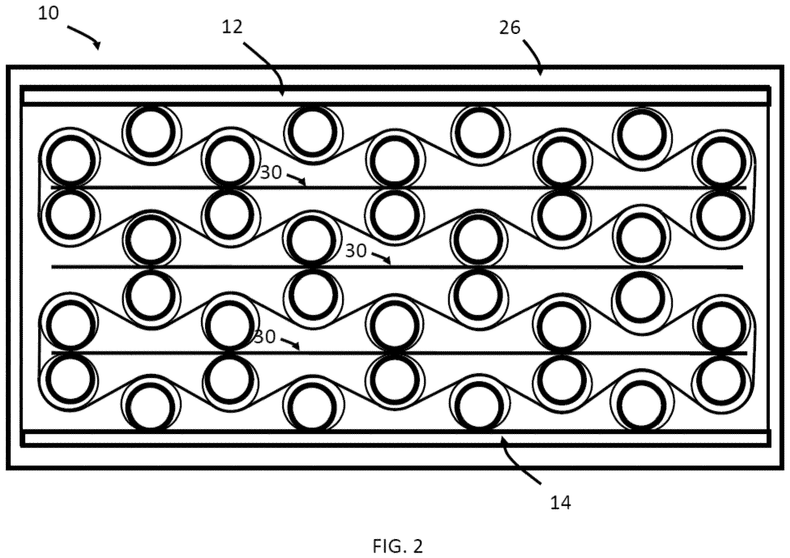

In einer Ausführungsform und wie in FIG. 2 gezeigt, umfasst das thermische Vakuumdämmelement 10 mehrere wärmestrahlungsreflektierende Elemente 30, wie beispielsweise Folien und/oder Platten. Teile der Wärmestrahlung, welche beispielsweise durch eine der mehreren Folien nicht abgefangen wird, kann somit trotzdem durch eine andere der mehreren Folien abgefangen werden. Somit wird etwa das Begrenzungselement 14 von der vom Begrenzungselement 12 ausgehenden Wärmestrahlung besser isoliert (und umgekehrt). Ist zudem eine (oder mehrere) der mehreren wärmestrahlungsreflektierenden Elemente 30 als Platte ausgeführt, wird zusätzlich die mechanische Stabilität der thermischen Vakuumdämmelementes 10 verbessert.

In einer Ausführungsform kann eines oder mehrere der wärmestrahlungsreflektierenden Elemente 30 auch längsangeordnete Profile umfassen. Diese dienen zur zusätzlichen Aufnahme der mechanischen Druckkräfte. Die restliche Oberfläche der wärmestrahlungsreflektierenden Elemente 30 kann dann durch dünne Folien ersetzt werden, was zu einer deutlichen Gewichtsreduktion führt.

Über das erste und/oder das zweite Fasergebilde 22, 24 erfolgt neben der Randabdichtung eine wesentliche Wärmeübertragung zwischen dem ersten Begrenzungsteil 12 und dem zweiten Begrenzungsteil 14. Die ersten und/oder zweiten Fasergebilde 22, 24 sind daher ausgestaltet, einen niedrigen Wärmeleitwert aufzuweisen.

Die ersten und/oder zweiten Fasergebilde 22, 24 können einen Wärmeleitwert von kleiner als 0,06 W/mK aufweisen. Die Fasergebilde 22, 24 können aus Glasfaser gebildet sein. Die Glasfaser kann einen Wärmeleitwert von etwa 1 W/mK aufweisen. Die Fasergebilde 22, 24 können aus Aramidfaser mit einem Wärmeleitwert von etwa 0,04 W/mK gebildet sein. Die Fasergebilde 22, 24 können aus Nylon-, Hanf- oder Carbonfaser gebildet sein. Die Fasergebilde 22, 24 können aus mehreren der genannten Materialien gebildet sein. Die Wärmeleitung ist zudem bestimmt durch einen Querschnitt des Fasergebildes.

Die ersten und/oder zweiten Fasergebilde 22, 24 können eine hohe Zugbelastbarkeit aufweisen. Somit können über die Fasergebilde 22, 24 eine hohe Kraft aufgenommen werden.

Derzeit scheint eine Aramidfaser besonders geeignet zu sein. Das Wort Aramid bezeichnet aromatische Polyamide, somit anisotrope Polymerfasern. Aramidfasern besitzen eine geringere Dichte als Glasfasern und weisen eine besonders hohe Zugfestigkeit und eine hohe Zähigkeit aus und somit ermüdungsfeste Eigenschaften auf. Eine Zugfestigkeit kann bei etwa 2800 $N/mm^2$ liegen.

Die ersten und/oder zweiten Fasergebilde 22, 24 können als Faserstrang oder Faden ausgebildet sein. Der Faden 22 kann wie in FIG. 1 oder FIG. 4 dargestellt, mit einem Ende an dem ersten Begrenzungsteil 12 und/oder an dem zweiten Befestigungsteil 14 befestigt sein und dann über die ersten Stützelemente 18, 18A und/oder die zweiten Stützelemente 20,20A oder abwechselnd über ein erstes Stützelement 18 und ein zweites Stützelement 20, ein weiteres erstes Stützelement 18, ein weiteres zweites Stützelement 20 usw. geführt werden, und wieder an dem ersten Befestigungsteil 12 und/oder dem zweiten Begrenzungsteil 14 befestigt sein.

Die ersten und/oder zweiten Fasergebilde 22, 24 können, als Faden ausgeführt, je nach Anordnung der ersten und zweiten Stützelemente 18, 18A, 20, 20A in unterschiedlichen Richtungen über die Stützelemente 18, 18A, 20, 20A geführt sein.

Die Ausbildung der ersten und/oder zweiten Fasergebilde 22, 24 als Fäden erlaubt einen geringen Querschnitt der Fasergebilde 22, 24. Somit wird die Wärmeleitung in den thermischen Vakuumdämmelement 10 verringert.

Die ersten und/oder zweiten Fasergebilde 22, 24 können in anderen Ausführungsformen als Gewebe ausgeführt sein. Das Gewebe kann die gesamte Fläche der Begrenzungsteile überdecken. Die Fasergebilde 22, 24 können in anderen Ausführungsformen als Gewebeband ausgeführt sein. Die Fasergebilde 22, 24 können als geflochtenes Band ausgeführt sein. Verschiedene Ausgestaltungen der Fasergebilde 22, 24 können miteinander kombiniert sein. Die Ausführung der ersten und/oder zweiten Faserelement 22, 24 als Gewebe ermöglicht eine hohe Zugfestigkeit bei gleichzeitigem Beibehalten eines minimalen Querschnittes der Faserelemente 22, 24. Somit wird die Wärmeleitung bei gleichzeitiger Erhöhung der mechanischen Stabilität verringert.

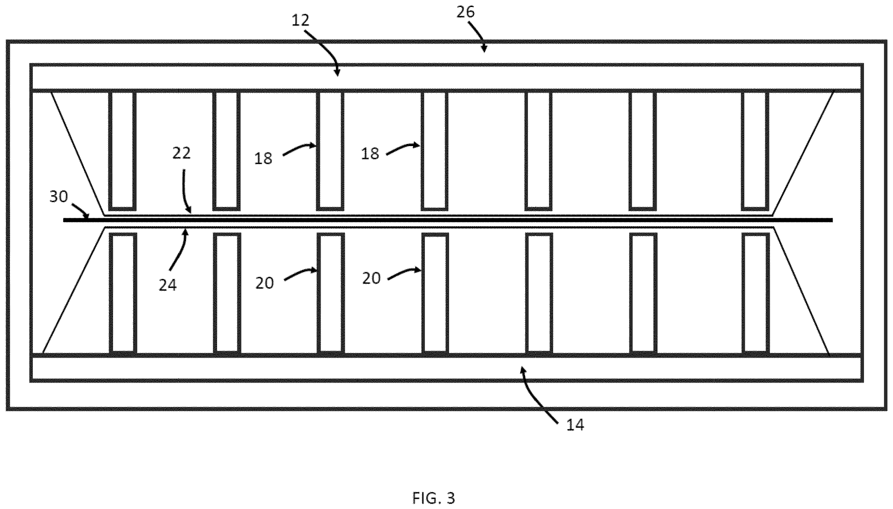

In einer Ausführungsform und wie in FIG. 3 gezeigt, erstrecken sich die ersten Stützelemente 18 von dem ersten Begrenzungsteil 12 weg in den vakuumierten Raum 16 und/oder erstrecken sich die zweiten Stützelemente 20 von dem zweiten Begrenzungsteil 14 weg in den vakuumierten Raum 16. Die ersten Stützelemente 18 erstrecken sich in Richtung des zweiten Begrenzungsteils 14. Die ersten Stützelemente 18 berühren nicht das zweite Begrenzungsteil 14. Die zweiten Stützelemente 20 erstrecken sich in Richtung des ersten Begrenzungsteils 12. Die zweiten Stützelemente 20 berühren nicht das zweite Begrenzungsteil 14. Das erste und das zweite Fasergebilde 22, 24 sind in dieser Ausführungsform nicht miteinander, sondern jeweils mit den Begrenzungsteilen 12, 14 verbunden.

Die ersten Stützelemente 18 können einstückig mit dem ersten Begrenzungsteil 12 ausgefertigt sein. Die zweiten Stützelemente 20 können einstückig mit dem zweiten Begrenzungsteil 14 ausgefertigt sein.

Eine beispielsweise infolge des atmosphärischen Drucks auf das Begrenzungselement 12 (oder 14) einwirkende Kraft wird auf das Stützelement 18 (oder 20) übertragen und von dem Fasergebilde 22 (oder 24) aufgenommen. Somit wird die mechanische Stabilität des thermischen Vakuumelementes 10 unter äußeren Luft- und Gasdrücken, welche größer als der Druck im vakuumierten Raum 16 sind, verbessert.

In einer Ausführungsform, und wie in FIG. 4 gezeigt, sind die Begrenzungsteile 12, 14 mit den Stützelementen 18, 20 so zueinander angeordnet, dass die ersten Stützelemente 18 und die zweiten Stützelemente 20 aneinander vorbeiragen und voneinander beabstandet sind. Das Fasergebilde 22 (oder auch Fasergebilde 24) verbindet die ersten Stützelemente 18 und die zweiten Stützelemente 20 im vakuumierten Raum 16 miteinander. Das Fasergebilde 22 kann an wenigstens einem der ersten Stützelemente 18, an wenigstens einem der zweiten Stützelemente 20, an dem ersten Begrenzungsteil 12 und/oder an dem zweiten Begrenzungsteil 14 fixiert oder festgelegt sein. Ein oberer Teil des Vakuumdämmelements umfassend das erste Begrenzungsteil 12 und die ersten Stützelemente 18 kann auch mit einem unteren Teil des Vakuumdämmelements umfassend das zweite Begrenzungsteil 14 und die zweiten Stützelemente 20 über das Fasergebilde 22 verbunden sein (in FIG. 4 nicht dargestellt). Das Fasergebilde 22 kann, wie in FIG. 4 gezeigt, eine Folie 30 zur Reflexion der von den Begrenzungselementen 12, 14 und den Stützelementen 18, 20 ausgehenden Wärmestrahlung umfassen. Das Fasergebilde 22 und die Folie 30 können als ein Schichtsystem aus zwei- oder mehrlagigen übereinanderliegenden Schichten ausgeführt sein. Somit wird eine kompakte Bauweise des thermischen Vakuumdämmelements 10 bei gleichzeitig hoher mechanischer Stabilität bewirkt.

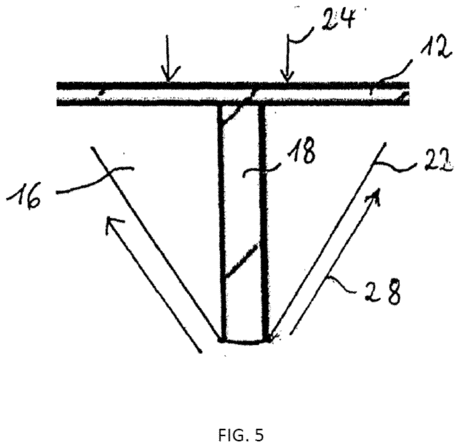

Mit Bezug auf Fig. 5 wird das Zusammenspiel zwischen den Stützelementen 18, 20 und den Fasergebilden 22, 24 deutlich. Fig. 5 zeigt einen kleinen Ausschnitt aus dem Vakuumdämmelement 10 der Fig. 1. Pfeile 24 zeigen die auf das Begrenzungsteil 12 einwirkende Kraft aufgrund des im Raum 16 herrschenden Vakuums. Eine beispielsweise infolge des atmosphärischen Drucks auf das Begrenzungselement 12 einwirkende Kraft wird auf das Stützelement 18 übertragen und beispielsweise von dem Fasergebilde 22 aufgenommen. Durch die aneinander vorbeiragenden Stützelemente 18, 20 wird eine Kraftumlenkung der äußeren Druckbelastung auf eine Zugbelastung der Fasern des Fasergebildes 22 erreicht. Durch das schräg angeordnete Fasergebilde 22 werden auch ebenfalls auftretende Querkräfte aufgenommen. Somit wird die mechanische Stabilität des thermischen Vakuumelementes 10 unter äußeren Luft- und Gasdrücken, welche größer als der Druck im vakuumierten Raum 16 sind, verbessert.

In einer Ausführungsform sind die Begrenzungsteile 12, 14 aus Metall gefertigt. Die Begrenzungsteile 12, 14 können aus Edelstahl gefertigt sein. Die Begrenzungsteile 12, 14 können aus Keramik, Glas, Laminat, und/oder Kunststoff gefertigt sein. Die Begrenzungsteile 12, 14 können ein metallbeschichtetes Faserlaminat umfassen oder aus diesem gefertigt sein.

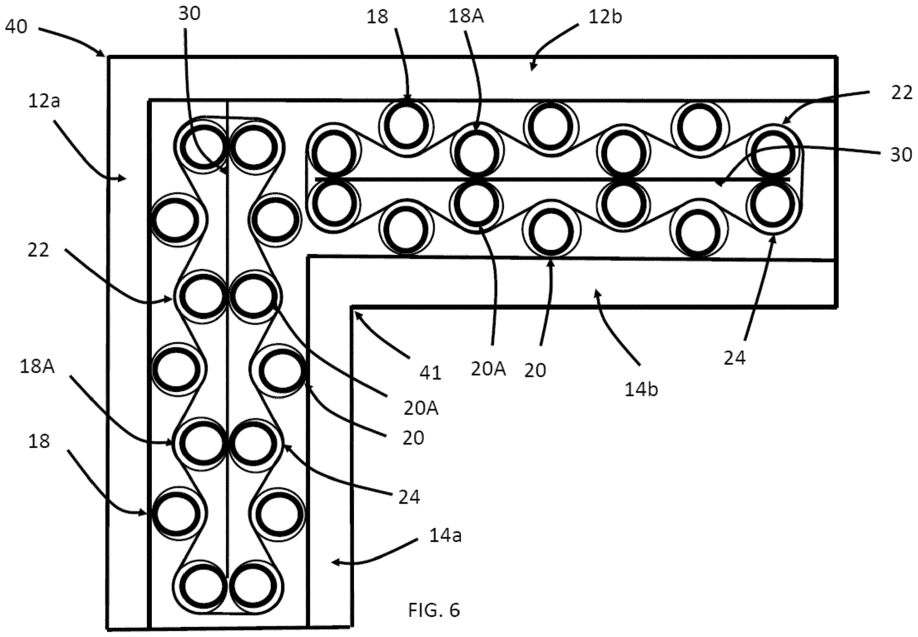

In einer Ausführungsform, und wie in FIG. 6 gezeigt, umfassen die Begrenzungsteile 12, 14 eine Kante 40 und/oder Ecke 41.

Sowohl das erste Begrenzungsteil 12 als auch das zweite Begrenzungsteil 14 sind so ausgebildet, dass sie eine Kante 40 und/oder Ecke 41 bilden. In der abgebildeten Ausführungsform verläuft eine erste Teilfläche 12a des ersten Begrenzungsteils 12 rechtwinklig zu einer zweiten Teilfläche 12b und bildet damit die Kante 40. Entsprechendes gilt für das zweite Begrenzungsteil 14 mit erster Teilfläche 14a und zweiter Teilfläche 14b, die eine Ecke 41 bilden.

Wie in FIG. 6 gezeigt, können die Begrenzungsteile 12, 14 für den jeweiligen Anwendungsfall ausgebildet sein. Werden nur ebene Platten zur Dämmung beispielsweise eines Raumes benutzt, so entstehen an den Kanten 40 und/oder Ecken 41 zwangsläufig Wärmebrücken, da ein unteres Begrenzungsteil 14 einer ersten Platte ein oberes Begrenzungsteil 12 einer zweiten Platte an der Kante und/oder Ecke 41 berührt. Die vorgeschlagene Ausbildung der Begrenzungsteile 12, 14 als Kante 40 und/oder als Ecke 41 erlaubt eine (Raum-) Dämmung ohne die Ausbildung thermischer Brücken, etwa in Folge von Wärmeleitung, da auch im Kantenbereich eine Berührung von äußerem oder erstem Begrenzungsteil 12 und innerem oder zweitem Begrenzungsteil 14 vermieden wird. Die Ausbildung mit ersten Stützelementen 18, 18A und zweiten Stützelementen 20, 20A sowie ersten und/oder zweiten Fasergebilden 22, 24 ist analog zu den vorstehend beschriebenen Ausführungsformen.

Die Begrenzungsteile 12, 14 können jeweils vollflächig sein, beispielsweise aus einer durchgehenden Edelstahlplatte. Eine Edelstahlplatte ist kostengünstig herzustellen und kann am Ende der Lebensdauer des Dämmelements vollständig wiedergewonnen werden. Die Recycling-Rate wird dadurch verbessert. Eine vollflächige Ausgestaltung kann eine mechanische Widerstandsfähigkeit des Vakuumdämmelements 10 erhöhen.

In einer Ausführungsformen weisen wenigstens eines der Begrenzungsteile 12, 14 Öffnungen oder Durchbrüche auf. Wenigstens eines der Begrenzungsteile 12, 14 kann aus Draht geformt sein. Es kann gitterförmig ausgebildet sein. Wenigstens eines der Begrenzungsteile 12, 14 kann als Profilkonstruktion ausgebildet sein. Eine solche Struktur mit Öffnungen weist ein geringeres Gewicht auf und verbraucht weniger Material. Bei größeren Öffnungen können die Begrenzungsteile mit den ersten und/oder zweiten Fasergebilden 22, 24 überspannt sein.

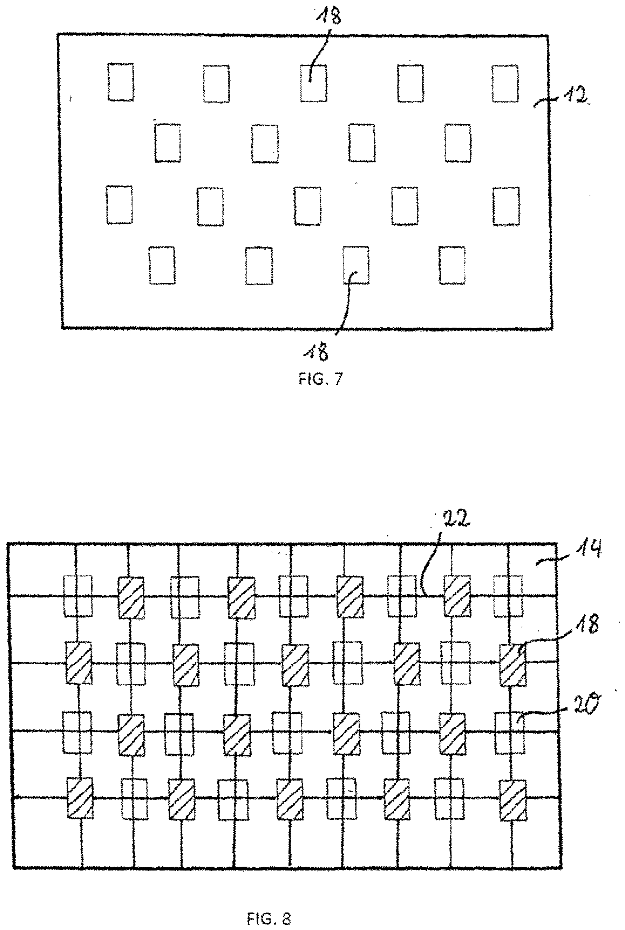

FIG. 7 zeigt eine Draufsicht auf das erste Begrenzungsteil 12 gemäß einer Ausführungsform. Stabförmige (erste) Stützelemente 18 sind in einem regelmäßigen Raster über die gesamte Fläche des Begrenzungsteils 12 verteilt. Die Stützelemente 18 sind in Spalten und Reihen angeordnet. Der Querschnitt der stabförmigen Stützelemente 18 ist in der in FIG. 7 dargestellten Ausführungsform rechteckig. Die stabförmigen Stützelemente 18 können jede andere Querschnittform aufweisen.

FIG. 8 zeigt einen Schnitt entlang der Linie A-A' in FIG. 4 mit Blick auf das zweite Begrenzungsteil 14. Die ersten Stützelemente 18 sind in dieser Darstellung geschnitten, während auf die zweiten Stützelemente 20 geblickt wird. In der Darstellung der FIG. 8 sind die Mittel 26 zum Abdichten des vakuumierten Raums weggelassen. In der dargestellten Ausführungsform ist das Fasergebilde 22 aus einzelnen Fäden beispielsweise einer Aramidfaser gebildet. Das Begrenzungsteil 14 ist beispielhaft rechteckig. Die einzelnen Fäden des Fasergebildes 22 laufen im Wesentlichen parallel zu den Rändern des Begrenzungsteils 14 und enden am Rand.

Die ersten Stützelemente 18 und die zweiten Stützelemente 20 ragen aneinander vorbei und sind voneinander beabstandet. Die Fäden des Fasergebildes 22 kreuzen sich jeweils auf den Stützelementen 18, 20. Sie können an ihren Kreuzungspunkten in bzw. auf den Stützelementen geführt sein (in FIG. 8 nicht dargestellt).

Die Stützelemente 18, 20 können an dem jeweiligen Begrenzungsteil 12, 14 befestigt sein. Die ersten und zweiten Stützelemente können mit dem ersten beziehungsweise dem zweiten Begrenzungsteil 12, 14 verschraubt, verlötet, verklebt, verschweißt, in dieses eingesteckt, eingeklemmt oder anderweitig befestigt sein. Die Stützelemente 18, 20 können mit dem jeweiligen Begrenzungsteil 12, 14 einteilig ausgebildet sein. Die Stützelemente 18, 20 können gleichförmig über die Begrenzungsteile 12, 14 verteilt sein. Die Stützelemente 18 können auf dem Begrenzungsteil 12 in einer Anordnung montiert sein, die versetzt ist zu einer Anordnung der Stützelemente 20 auf dem Begrenzungsteil 14.

Die Stützelemente 18 können eine gleiche Form haben wie die Stützelemente 20. Die Stützelemente 18 können sich in ihrer Form von den Stützelementen 20 unterscheiden.

Die Stützelemente 18, 20 können leistenförmig ausgebildet sein. Die Stützelemente 18, 20 können sich als Rippen über eine gesamte Ausdehnung der Begrenzungsteile 12, 14 erstrecken. Die Rippen können v-förmig ausgebildet sein, wobei die Öffnung des v dem jeweiligen Begrenzungsteil zugewandt sein kann.

Die Stützelemente 18, 20 können im Wesentlichen stabförmig ausgebildet sein. Die stabförmigen Stützelemente 18, 20 können in Reihen und Spalten gleichmäßig über die Begrenzungsteile 12, 14 verteilt sein. Stabförmige Stützelemente 18, 20 können einen im Wesentlichen rechteckigen Grundriss aufweisen. Stabförmige Stützelemente 18, 20 können einen im Wesentlichen quadratischen Grundriss aufweisen. Stabförmige Stützelemente 18, 20 können einen im Wesentlichen kreisförmigen oder ovalen Grundriss aufweisen. Stabförmige Stützelemente 18, 20 können einen beliebigen Grundriss aufweisen. Eine Dimensionierung und eine Anzahl von Stützelementen je Begrenzungsteil ist in starkem Maße abhängig von den verwendeten Materialien, dem Anwendungsbereich und eventuell zusätzlich auf das Vakuumdämmelement einwirkenden Kräften.

Die Stützelemente 18, 20 können Führungen für die ersten und/oder zweiten Fasergebilde 22, 24 aufweisen. Die Führungen können in der Form von Auskerbungen oder Nuten ausgeführt sein. Die Führungen können in der Form von seitlichen Einschnitten ausgeführt sein. Die Stützelemente 18, 20 können Löcher als Führungen aufweisen. Die Fasergebilde 22, 24 können an den Stützelementen 18, 20 fixiert sein. Die Stützelemente 18, 20 können Vorrichtungen zum Fixieren aufweisen. Die Vorrichtungen können Klemmvorrichtungen sein.

Die ersten und/oder zweiten Fasergebilde 22, 24 können im Randbereich geführt und an den Rändern der Begrenzungsteile 12, 14 befestigt sein, um beispielsweise eine Abdichtungsfolie 26 im Randbereich zu verstärken. Die Fasergebilde 22, 24 können im Randbereich im Wesentlichen senkrecht von dem ersten Begrenzungsteil 12 zu dem zweiten Begrenzungsteil 14 geführt sein. Die Fasergebilde 22, 24 können im Randbereich diagonal verlaufen. Die Fasergebilde 22, 24 können im Randbereich als Gewebe ausgeführt sein und zwischen den Stützelementen 18, 20 als Fäden. Somit können die Fasergebilde 22, 24 flexibel an die baulichen und mechanischen Randbedingungen der thermischen Vakuumdämmelemente 10 angepasst werden.

Die Begrenzungsteile 12, 14 können als vollflächige Edelstahlplatten ausgebildet sein, mit einer engen Faserbespannung und einer dünnen Edelstahlfolie im Randbereich, die mit den Edelstahlplatten gasdicht verbunden ist. Die enge Faserbespannung kann so dimensioniert sein, dass sie eine sehr dünne Edelstahlfolie verstärkt. Hierdurch kann eine sehr robuste, recyclingfähige Vakuumdämmplatte zur Verfügung gestellt werden.

Die Mittel 26 zum Abdichten des vakuumierten Raums 16 können wie in FIG. 1 dargestellt das gesamte Vakuumdämmelement 10 umschließen. Die Mittel 26 zum Abdichten des vakuumierten Raums 16 können ein Folienbeutel, insbesondere ein metallisierter Folienbeutel sein.

Die Mittel 26 zum Abdichten des vakuumierten Raums 16 können lediglich entlang der Ränder der sich gegenüberstehenden Begrenzungsteile 12, 14 verlaufen. Die Mittel 26 zum Abdichten des vakuumierten Raums 16 können direkt entlang der Ränder der Begrenzungsteile 12, 14 mit diesen diffusionsdicht verbunden sein. Die Mittel 26 zum Abdichten des vakuumierten Raums 16 können mit den Begrenzungsteilen 12, 14 verklebt oder verschweißt sein. Die Mittel 26 zum Abdichten des vakuumierten Raums 16 können an ein oder an beide der Begrenzungsteile 12, 14 angeformt sein. Die Mittel 26 können aus dem gleichen Material wie die Begrenzungsteile 12, 14 gebildet sein.

Die Mittel 26 zum Abdichten des vakuumierten Raums 16 können aus diffusionsdichtem Material bestehen. Die Mittel 26 zum Abdichten des vakuumierten Raums 16 können sehr dünn ausgebildet sein, um eine Wärmeübertragung entlang der Ränder zu minimieren. Die Mittel 26 zum Abdichten des vakuumierten Raums 16 können aus dünner Metallfolie ausgebildet sein. Eine Dicke der Metallfolie kann zwischen 1 μm und 200 μm betragen. Eine Dicke der Metallfolie kann einen anderen Wert aufweisen. Die Mittel 26 zum Abdichten des vakuumierten Raums 16 können aus Edelstahlfolie mit einer Dicke zwischen 1 μm und 200 μm bestehen oder diese umfassen. Die Mittel 26 zum Abdichten des vakuumierten Raums 16 können aus Glas oder aus metallisierter Kunststofffolie bestehen. Der Randbereich des Vakuumdämmelements kann durch das Fasergebilde 22 (oder 24) verstärkt sein, wie in FIG. 4 gezeigt ist. Insbesondere können Fasern des Fasergebildes 22 (oder 24) im Randbereich im Wesentlichen senkrecht zu den Begrenzungsteilen 12, 14 verlaufen.

In einer Ausführungsform ist ein erstes Vakuumdämmelement als ein auf einer Seite geöffneter Behälter ausgeformt. Beispielsweise sind das erste Begrenzungsteil 12 und das zweite Begrenzungsteil 14 in Form eines auf einer Seite geöffneten Quaders, Würfels oder Zylinders ausgebildet. Somit definieren die Begrenzungsteile einen vakuumierten Raum, in den wie oben beschrieben Stützelemente 18, 20 ragen, die über die ersten und/oder zweiten Fasergebilde 22, 24 verbunden sind. Für die offene Seite kann ein zweites Vakuumdämmelement als Deckel bereitgestellt werden.

Das zweite Vakuumdämmelement kann im Wesentlichen die Form einer Platte aufweisen, die die äußere Form der fehlenden Seite abbildet. Alternativ kann als Deckel auch ein zweites Vakuumdämmelement dienen, das im Wesentlichen die gleiche Form wie das erste Vakuumdämmelement aufweist, jedoch etwas größer ausgebildet ist, so dass es über das erste Vakuumdämmelement gestülpt werden kann. Hierbei können die Seitenwände des größeren Vakuumdämmelements die Seitenwände des kleineren Vakuumdämmelements vollständig oder teilweise überdecken.

Das Vakuum verhindert dann den Wärmetransport vom Inneren des (inneren) Behälters nach außen. Diese Konstruktionsform kann z.B. bei Pufferspeichern oder auch bei Containern Anwendung finden. Vorzugsweise wird das ersten und/oder zweite Fasergebilde 22, 24 bei dieser Ausführungsform stärker ausgelegt, da die Fasergebilde 22, 24 zusätzlich die statische Belastung des Inhalts tragen müssen.

Mit den zwei, jeweils einseitig geöffneten und übereinander geschobenen Behältern entsteht eine leicht zu öffnende Vorrichtung mit hervorragenden thermischen Dämmeigenschaften. Diese kann beispielsweise als Kühlbox Anwendung finden. In einer Ausführungsform sind hierbei die Begrenzungsteile nicht aus reinem Metall, sondern aus metallbeschichtetem Faserlaminat hergestellt.

Bei der Herstellung des erfindungsgemäßen Vakuumdämmelements 10 wird zunächst die Form wie beschrieben einschließlich der Abdichtung hergestellt und dann in bekannter Weise der umschlossene Raum vakuumiert, um einen vakuumierten Raum 16 bereitzustellen. Um die Qualität des Vakuums zu verbessern oder die Lebensdauer der Vakuumdämmelemente zu verlängern, kann in den Raum zwischen den Begrenzungsteilen 12, 14 ein Gettermaterial eingebracht werden, welches beispielsweise von außen über die Zeit eindringende Gasmoleküle binden kann und somit das Vakuum auch bei einer Verschlechterung der Abdichtung aufrechterhalten kann. Die Erfinder haben mit einem Vakuum von etwa 10-4 mbar sehr gute Dämmwerte im Bereich von 10-5 W/mK erreicht.

Das erfindungsgemäße Vakuumdämmelement 10 kann den bisher meist aus pyrogener Kieselsäure hergestellten Stützkern üblicher Vakuumisolationspaneele durch eine einfache Konstruktion ersetzen, die zum größten Teil aus Metall gefertigt sein kann. Hierdurch kann der Primärenergiebedarf bei der Herstellung erheblich reduziert werden. Auch wird die Herstellung kostengünstiger. Zudem kann bei Einsatz von Metallfolien im Randbereich die Diffusionsdichtigkeit und Widerstandsfähigkeit des Randes deutlich verbessert werden. Dies ermöglicht eine lange Lebensdauer und vereinfacht den Umgang mit dem Dämmstoff.

Wenngleich spezifische Ausführungsformen dargestellt und beschrieben worden sind, versteht der Durchschnittsfachmann, dass eine Vielzahl alternativer und/oder äquivalenter Implementierungen für die gezeigten und beschriebenen spezifischen Ausführungsform substituiert werden können, ohne von der grundlegenden Idee der vorliegenden Erfindung abzuweichen. Die vorliegende Anmeldung soll alle Adaptionen oder Variationen der hierin erörterten spezifischen Ausführungsformen abdecken.

**Patentansprüche**

1.   Thermisches Vakuumdämmelement (10), umfassend:

    ein erstes Begrenzungsteil (12), und ein zweites Begrenzungsteil (14);

die voneinander beabstandet sind und zwischen sich einen vakuumierten Raum (16) definieren;

Mittel (26) zum Abdichten des vakuumierten Raumes (16);

Erste Stützelemente (18, 18A), die sich in den vakuumierten Raum (16) erstrecken, wobei mindestens eines der ersten Stützelemente (18) an dem ersten Begrenzungsteil (12) anliegt;

zweite Stützelemente (20, 20A), die sich in den vakuumierten Raum (16) erstrecken, wobei mindestens eines der zweiten Stützelemente (20) an dem zweiten Begrenzungsteil (14) anliegt;

wobei die ersten Stützelemente (18, 18A) von dem zweiten Begrenzungsteil (14) beabstandet sind;

wobei die zweiten Stützelemente (20, 20A) von dem ersten Begrenzungsteil (12) beabstandet sind;

wobei die ersten und die zweiten Stützelemente (18, 18A, 20, 20A) voneinander beabstandet sind;

ein erstes Fasergebilde (22), dass die ersten Stützelemente (18, 18A) miteinander verbindet;

ein zweites Fasergebilde (24), dass die zweiten Stützelemente (20, 20A) miteinander verbindet;

wobei das erste und das zweite Fasergebilde (22,24) eine geringe Wärmeleitfähigkeit aufweisen und derart ausgestaltet sind, zumindest den durch das Vakuum auf das erste und das zweite Begrenzungsteil (12,14) erzeugten Druck aufzufangen; und

ein wärmestrahlungsreflektierendes Element (30), das sich im vakuumierten Raum (16) zwischen den ersten und zweiten Stützelementen (18, 20) erstreckt, wobei mindestens eines der ersten Stützelemente (18A) und der zweiten Stützelemente (20A) an dem wärmestrahlungsreflektierendem Element (30) befestigt sind.

2. Vakuumdämmelement (10) nach Anspruch 1, wobei die ersten und zweiten Begrenzungsteile (12, 14) und/oder das wärmestrahlungsreflektierende Element (30) als ein flächiges, gebogenes und/oder wellenförmiges und/oder gewelltes Bauteil ausgeführt sind.

3. Vakuumdämmelement (10) nach einem der vorangehenden Ansprüche, wobei das erste Fasergebilde (22) und das zweite Fasergebilde (24) an ihren Rändern (25) derart miteinander verbunden sind, dass das wärmestrahlungsreflektierende Element (30) von dem miteinander verbundenen ersten und zweiten Fasergebilden (22, 24) umschlossen ist.

4. Vakuumdämmelement (10) nach einem der vorangehenden Ansprüche, wonach das wärmestrahlungsreflektierende Element (30) eine Folie oder eine Platte umfasst.

5. Vakuumdämmelement (10) nach einem der vorangehenden Ansprüche, wobei das wärmestrahlungsreflektierende Element (30) derart ausgebildet ist, thermische Strahlung, die von mindestens einem der ersten oder zweiten Begrenzungsteile (12, 14) und den ersten oder zweiten Stützelementen (18, 18A, 20, 20A) ausgeht, von dem zweiten oder ersten Begrenzungsteil (14, 12) und den zweiten oder ersten Stützelementen (20, 20A, 18, 18A) zu isolieren.

6. Vakuumdämmelement (10) nach einem der vorangegangenen Ansprüche, wobei wenigstens eines der Fasergebilde (22, 24) Glas-, Nylon-, Hanf-, Aramid- oder/und Carbonfasern mit einem Wärmeleitwert von kleiner als 0,06 W/mK aufweist.

7. Vakuumdämmelement (10) nach einem der vorangegangenen Ansprüche, wobei wenigstes eines der Fasergebilde (22, 24) als Fasergewebe oder in Form einzelner zwischen den Stützelementen (18, 18A, 20, 20A) gespannter Fäden ausgebildet ist.

8. Vakuumdämmelement (10) nach einem der vorangegangenen Ansprüche, wobei wenigstens eines der Begrenzungsteile (12, 14) Metall, Keramik, Glas, Laminat, und/oder Kunststoff umfasst.

9. Vakuumdämmelement (10) nach einem der vorangegangenen Ansprüche, wobei wenigstens eines der Begrenzungsteile (12, 14) Öffnungen aufweist.

10. Vakuumdämmelement (10) nach einem der vorangegangenen Ansprüche, wobei die ersten und zweiten Stützelemente (18, 20) im Wesentlichen stabförmig ausgebildet sind.

11. Vakuumdämmelement (10) nach Anspruch 10, wobei die ersten und zweiten Stützelemente (18, 20) in Reihen und Spalten gleichmäßig über die Begrenzungsteile (12, 14) verteilt sind.

12. Vakuumdämmelement (10) nach einem der Ansprüche 1 bis 9, wobei die ersten und zweiten Stützelemente (18, 20) im Wesentlichen rippenförmig, insbesondere v-förmig ausgebildet sind und sich im Wesentlichen über eine gesamte Ausdehnung der Begrenzungsteile (12, 14) erstrecken.

13. Vakuumdämmelement (10) nach einem der vorangegangenen Ansprüche, wobei das erste und/oder das zweite Fasergebilde (22, 24) auch einen den vakuumierten Raum (16) begrenzenden Randbereich überspannt.

**14.** Vakuumdämmelement (10) nach einem der vorangegangenen Ansprüche, wobei die Begrenzungsteile (12, 14) vakuumdicht ausgebildet sind und die Mittel (26) zum Abdichten des vakuumierten Raums (16) eine Randfolie umfassen, die entlang der Ränder der Begrenzungsteile (12, 14) mit den Begrenzungsteilen (12, 14) verschweißt oder verklebt sind.

**15.** Vakuumdämmelement (10) nach einem der Ansprüche 1 bis 13, wobei die Mittel (26) zum Abdichten des vakuumierten Raums (16) einen Folienbeutel umfassen, der die Begrenzungsteile (12, 14) mit dem dazwischen gelegenen vakuumierten Raum (16) vollständig umgibt.

**16.** Vakuumdämmelement (10) nach einem der vorangegangenen Ansprüche, wobei die Begrenzungsteile (12, 14) als einseitig geöffnete Quader oder Zylinder ausgebildet sind.

**17.** Thermischer Isolationsbehälter mit einer Behälterwand umfassend ein Vakuumdämmelement (10) nach einem der vorangegangenen Ansprüche.

**18.** Thermischer Isolationsbehälter nach Anspruch 17, umfassend entweder ein Vakuumdämmelement (10) nach Anspruch 16 und ein als Deckel für den Quader oder den Zylinder ausgebildetes Vakuumdämmelement (10) nach einem der Ansprüche 1 bis 15 oder zwei Vakuumdämmelemente (10) nach Anspruch 16, die so dimensioniert sind, dass sie ineinander schiebbar sind.

FIG. 1

FIG. 2

EP 4 617 550 A1

FIG. 3

FIG. 4

EP 4 617 550 A1

FIG. 5

FIG. 6

EP 4 617 550 A1

FIG. 7

FIG. 8

Europäisches
Patentamt

European
Patent Office

Office européen
des brevets

# EUROPÄISCHER RECHERCHENBERICHT

**Nummer der Anmeldung**

EP 24 16 2694

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | EP 3 936 324 B1 (V21 GMBH [DE]) 10. Mai 2023 (2023-05-10) * Absatz [0011] - Absatz [0052]; Ansprüche 1,2,3,4,7,8,10,11,12; Abbildung 1 * ----- | 1-18 | INV. F16L59/065 F16L59/02 F16L59/08 |
| Y | US 2023/221061 A1 (KIM DAEWOONG [KR] ET AL) 13. Juli 2023 (2023-07-13) * Absatz [0042] - Absatz [0057]; Abbildung 3A * ----- | 1-18 | |
| A | CN 114 811 271 A (HANGZHOU FUSHIDA SPECIAL MAT CO LTD) 29. Juli 2022 (2022-07-29) * das ganze Dokument * ----- | 1-18 | |

**RECHERCHIERTE SACHGEBIETE (IPC)**

F16L

Der vorliegende Recherchenbericht wurde für alle Patentansprüche erstellt

| Recherchenort | Abschlußdatum der Recherche | Prüfer |
|---|---|---|
| München | 29. Juli 2024 | Möbius, Henning |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 16 2694

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-07-2024

| Im Recherchenbericht angeführtes Patentdokument | Datum der Veröffentlichung | Mitglied(er) der Patentfamilie | Datum der Veröffentlichung |
|---|---|---|---|
| EP 3936324 B1 | 10-05-2023 | CN 115803185 A | 14-03-2023 |
| | | EP 3936324 A1 | 12-01-2022 |
| | | JP 2023534424 A | 09-08-2023 |
| | | US 2023234324 A1 | 27-07-2023 |
| | | WO 2022008281 A1 | 13-01-2022 |
| US 2023221061 A1 | 13-07-2023 | AU 2018309540 A1 | 19-03-2020 |
| | | AU 2022201064 A1 | 10-03-2022 |
| | | CN 110998165 A | 10-04-2020 |
| | | CN 115014036 A | 06-09-2022 |
| | | EP 3662190 A1 | 10-06-2020 |
| | | KR 20190013345 A | 11-02-2019 |
| | | KR 20220148147 A | 04-11-2022 |
| | | KR 20240063843 A | 10-05-2024 |
| | | US 2021140704 A1 | 13-05-2021 |
| | | US 2023221061 A1 | 13-07-2023 |
| | | WO 2019027231 A1 | 07-02-2019 |
| CN 114811271 A | 29-07-2022 | CN 113847510 A | 28-12-2021 |
| | | CN 114811271 A | 29-07-2022 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3936324 B1